# EUROPEAN PATENT APPLICATION

(11) **EP 4 679 209 A1**
(43) Date of publication of application: **14.01.2026**
(21) Application number: 25188271.8
(22) Date of filing: 08.07.2025
(51) Int. Cl.: G05B 19/4099, B22F 7/06, B23P 6/00

(54) **ADDITIVE MANUFACTURING OF REPLACEMENT PARTS**

(30) Priority: 08.07.2024 US 202418765996
(71) Applicant: RTX Corporation, Farmington, CT 06032 (US)
(72) Inventor: BINEK, Lawrence, East Hartford, 06118 (US); OTT, Joseph, East Hartford, 06118 (US); SIROIS, Dean, East Hartford, 06118 (US); GUSTAFSON, Brendan, East Hartford, 06118 (US)
(74) Representative: Dehns

(57) **Abstract**

A method of making a replacement part (10) includes obtaining a physical example of a target part (10) and imaging the physical example of the target part (10) to produce a 3D image of the target part (10). The 3D image of the target part (10) is compared to parts in a PLM database to identify a reference part (10-A) to use as a basis making a replacement part for the target part (10). The PLM database includes a digital model for a baseline AM technique for making the reference part (10-A). The reference part (10-A) is compared to the target part (10) to identify missing and/or extraneous features (10Δ) on the reference part (10-A). A replacement part manufacturing method for modifying the reference part (10-A) to provide missing features (10Δ) and/or to remove extraneous features to make a replacement part for the target part (10) is determined. The replacement part for the target part (10) is made using the replacement part manufacturing method.

## Description

The present invention relates generally to fabrication of replacement parts and, more particularly, to an approach for using additive manufacturing techniques for making replacement parts.

Replacement parts are often needed to facilitate repair and return to service of complex assemblies in a variety of fields. This is particularly true for aerospace applications that are characterized by many complex assemblies, including gas turbine engines and a wide variety of aircraft systems, that remain in active service for many years after manufacture of new models has ended. As a result, replacement parts may not always be readily available.

### SUMMARY

One aspect of this disclosure is directed to a method of making a replacement part that includes obtaining a physical example of a target part and imaging the physical example of the target part to produce a three-dimensional (3D) image of the target part. The 3D image of the target part is compared to parts in a product lifecycle management (PLM) database to identify a reference part to use as a basis making a replacement part for the target part. The PLM database includes a digital model for a baseline additive manufacturing (AM) technique for making the reference part. The reference part is compared to the target part to identify missing and/or extraneous features on the reference part. A replacement part manufacturing method for modifying the reference part to provide missing features and/or to remove extraneous features to make a replacement part for the target part is determined. The replacement part for the target part is made using the replacement part manufacturing method.

Another aspect of this disclosure is directed to a replacement part including a substrate made using a first AM technique based on a reference part digital model and a missing element on the substrate. The reference part has a different design than a target part. The missing element is made using a second AM technique based on a replacement part method. The combination of the substrate and the missing element on the substrate conform to geometric and mechanical property specifications for the target part.

### BRIEF DESCRIPTION OF THE DRAWINGS

Fig. 1 is a view of a target part of the present invention.
Fig. 2 is a schematic of a camera configured to create a three-dimensional image of the target part.
Fig. 3A is a view of a first reference part.
Fig. 3B is a view of a second reference part.
Fig. 4 is a schematic showing a comparison between a reference part and the target part.
Fig. 5 is a view of a replacement part of the present invention.
Fig. 6 is a flowchart of the process of the present invention.

### DETAILED DESCRIPTION

Complex mechanical assemblies used in a variety of applications, including aerospace applications, typically require access to replacement parts to maintain them in service for their designed life cycles. Manufacturers typically provide such replacement parts as long as it is economically desirable to do so. Near or after the end of the designed life cycles, replacement parts may no longer be readily available for a variety of reasons. Some complex mechanical assemblies, including a wide variety of aerospace systems and gas turbine engines, remain in active service for many years after manufacture of current models has ended, creating challenges to maintaining such systems safe for flight operations.

Programs directed to addressing continued operation of older mechanical assemblies can sometime be referred to as "Cold Start" programs. Obtaining replacement parts for such programs is often challenging due to a lack of a ready supply base. The tooling, suppliers and even technical definition for Cold Start replacement parts can be degraded or missing. As a result, new replacement parts are typically very costly and challenging to procure because they are no longer a production part. The lead time to identify and develop a new supplier can be excessive. Because Cold Start programs often require only limited replacement part quantities, the piece-part cost of such parts can be high.

Additive manufacturing (AM) techniques can help provide replacement parts for Cold Start programs. Examples of such AM techniques include powder-based processes such as laser powder bed fusion (PBF-LB), electron beam powder bed fusion (PBF-EB), directed energy deposition (DED) and other AM techniques known in the art. Such AM techniques typically require a digital model compatible with the desired AM techniques of the replacement part. Cold Start programs typically do not have such digital models of target parts readily available, often because the original program was completed before the advent of AM techniques or even the common use of digital design tools. The situation can be the case for aerospace parts, particularly gas turbine engine parts.

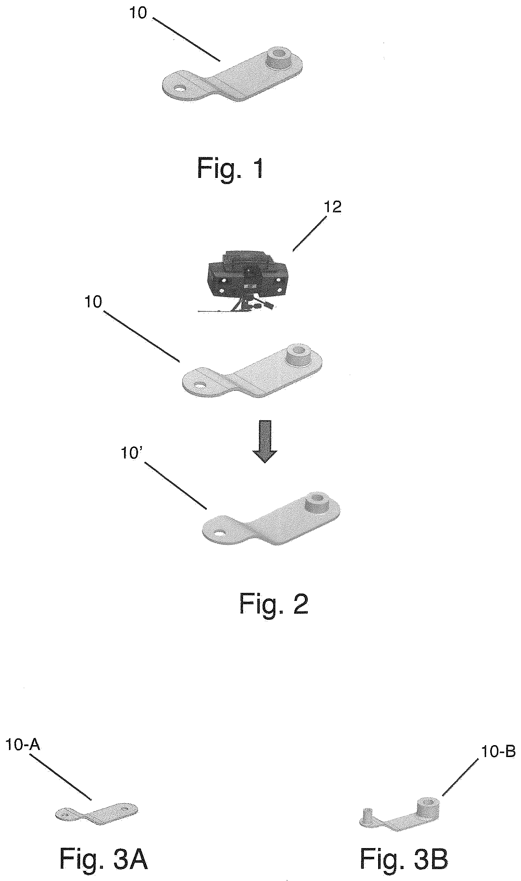

This invention provides a streamlined process for obtaining digital models of target parts, such as target part 10 shown in Fig. 1, when an example of the target part 10 is physically available for inspection. Fig. 2 shows a schematic of a camera 12 configured to create a three-dimensional (3D) image 10' of the target part 10. The camera 12 can be any camera suitable to make detailed three-dimensional images of parts that are accurate to capture fine features of the parts. The camera 12 should be configurable to produce, directly or indirectly, the 3D image 10' in a useful format, such as a STL ("stereolithography") format. A characteristic of the STL file format is that it approximates a 3D surface as a triangular mesh, a large number of very small, non-overlapping triangles. Other file formats, such as an OBJ file that represents 3D surfaces using smooth splines, or other file formats deemed suitable for the target part **10** can be used.

The file containing information about the 3D image **10'** is typically not a digital model that can be used to produce replicas of the target part **10.** The 3D image **10',** though, can be used to determine whether a database of existing digital models (e.g., a product lifecycle management (PLM) database) includes one or more digital models of parts sufficiently similar to the target part **10** to serve as reference models (see Figs. 3A and 3B) to be used for making replacement parts for the target part **10.** For example, the 3D image **10'** can be compared against similar parts in a PLM database by comparing the 3D image **10'** to digital renderings of parts in the PLM database across three axes (e.g., x-, y-, and z-axes). This comparison can identify similar parts, **10-A** and **10-B** in Figs. 3A and 3B, that can be used as reference parts even though the reference part **10-A, 10-B** has a different design than a target part **10.**

The comparison of the 3D image **10'** to similar parts in the PLM database can be done by any appropriate method. Automated techniques that rely on indexing of the parts in the PLM database are possible. For example, the parts in the PLM database can be indexed by key features that correlate to features on the 3D image **10'** to make it easier to identify reference parts **10-A** and **10-B.** Machine learning techniques can also be used to identify reference parts **10-A** and **10-B.**

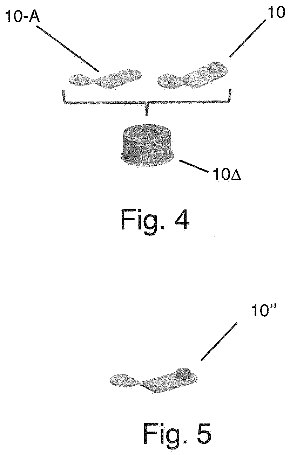

Once one or more suitable reference parts **10-A, 10-B** are identified, the reference parts **10-**A, **10-B** are compared to the 3D image **10'** or target part **10** to identify missing and/or extraneous features on the reference parts **10-A, 10-B.** For example, Fig. 4. shows a comparison between the reference part **10-A** and the target part **10** that results in feature **10Δ** being the difference between the reference part **10-A** and the target part **10.** In this example, feature **10Δ** is a feature that is found on the target part **10,** but is missing from the reference part **10-A.** In other examples, the reference part may be missing more than one feature as compared to the 3D image **10'** or target part **10.** In still other examples, the reference part may include one or more extraneous features that are not found in the 3D image **10'** or target part **10.**

After identifying differences between the reference part, e.g., part **10-A,** and the 3D image **10'** or target part **10,** an approach to modifying the reference part using AM techniques to match the configuration of the 3D image **10'** or target part **10** (i.e., a replacement part manufacturing method) is determined. The approach may include modifying the digital model of the reference part **10-A** that already exists in the PLM system to include the missing feature **10Δ** and then manufacturing a replacement part that conforms to the geometric and mechanical specifications for the target part **10** using the AM technique that is the baseline for the digital model in the PLM system. If the missing feature **10Δ** would be relatively difficult to make using the baseline AM technique for the reference part **10-A,** a combination of AM techniques can be used. Using the example of Fig. 4, it may be that the PLM digital model for the reference part **10-A** calls for manufacture using PBF-LB techniques, but the missing feature **10Δ** has a geometry, such as the hollow cylinder shown in Fig. 4, that could be difficult to make using PBF-LB techniques. In such a situation, the reference part **10-A** could be made using PBF-LB techniques consistent with the existing PLM digital model and the missing feature **10Δ** could be deposited on the finished reference part **10-A** with an alternate technique, such as DED, that is more compatible with the missing feature **10Δ** geometry. The finished replacement part **10"** essentially matches the geometry of the 3D image **10'** or target part **10.** Alternately, the missing feature **10Δ** could be made with a preferred technique, such as DED, separate from the reference part **10-A** and attached later using an appropriate joining method (e.g., welding or other joining method) to finish a replacement part **10"** (shown in Fig. 5) that essentially matches the 3D image **10'** or target part **10.** If the reference part **10-A** includes one or more extraneous features not found on the 3D image **10'** or target part **10,** the extraneous features can be removed using any suitable techniques, including subtractive manufacture techniques that include but are not limited to machining, cutting, etc. The various manufacturing methods described above typically leave artifacts in the finished part that permit the method of manufacture to be identified by examination of the finished part. For example, a replacement part **10"** made by depositing a missing feature **10Δ** on a PBF-LB reference part (e.g., substrate) **10-A** using DED techniques will display artifacts of the PBF-LB process used to make the reference part **10-A** and the DED process used to deposit the missing feature **10Δ** on the reference part **10-A.** Similarly, a replacement part **10"** made by attaching a missing feature **10Δ** onto a PBF-LB reference part (e.g., substrate) **10-A** using joining techniques will display artifacts of the PBF-LB process used to make the reference part **10-A** and the joining process used to attach the missing feature 10Δ onto the reference part **10-A.** Subtractive manufacturing methods also leave artifacts that are identifiable after manufacture of a replacement part **10".** The artifacts discussed above could be localized differences in material microstructure, evidence of melting, evidence of cutting, etc.

The replacement part **10"** typically should be more than just a geometric match for the target part **10.** The replacement part **10"** should also conform to the material and mechanical property specifications for the target part **10** to be suitable to replace the target part **10** in the intended environment. For example, the material used to make the replacement part **10"** should either be the same material used to make the target part **10** or a recognized substitute material. Suitable materials may include aluminum alloys, titanium alloys, superalloys, specialty steels, and any other material appropriate for a particular application.

Further, the replacement part **10"** should have a desired microstructure, surface finish, and post-processing steps to conform to the mechanical property specification for the target part **10.** Suitable post-processing steps can include, but are not limited to, thermal stress relief, peening, surface finishing (e.g., polishing), etc. In addition, any subtractive manufacturing (e.g., machining, etc.) steps required to make the replacement part **10"** conform to the target part **10** specifications should be applied.

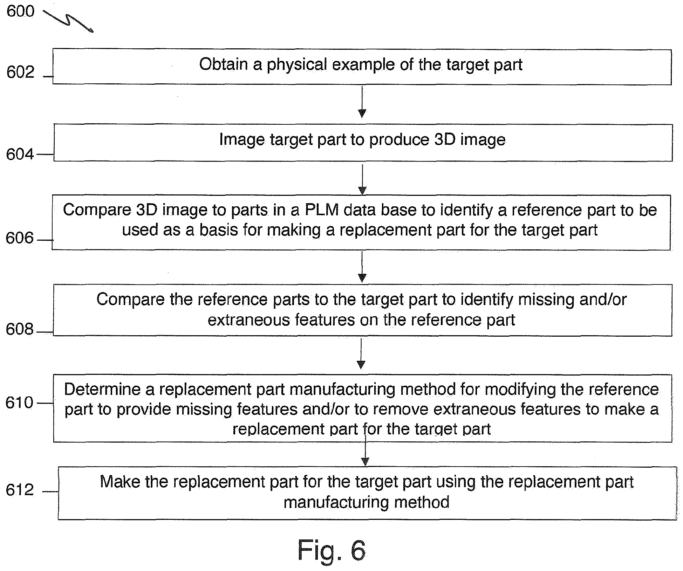

Fig. 6 is a flow chart showing a process **600** of this disclosure. In step **602** a physical example of the target part **10** is obtained. The target part **10** is imaged in step **604** using a camera or other known means to produce 3D image **10'.** In step **606,** the 3D image 10' is compared to parts in a PLM data base to identify one or more reference parts **10-A, 10-B** to be used as a basis for making a replacement part **10"** for the target part **10.** In step **608,** the reference parts **10-A, 10-B** are compared to the target part **10** to identify missing and/or extraneous features on the reference parts **10-A**, **10-B**. In step **610,** a replacement part manufacturing method that can be used to provide missing features and/or remove extraneous features to make a replacement part **10"** for the target part **10** is determined and is implemented in step **612** to produce a finished replacement part **10".**

The disclosed process allows for relatively quick manufacture of replacement parts based on parts in an existing PLM to obviate the need to develop complete digital models of the replacement parts. Rather the comparison serves as the foundation for an additive manufacturing plan to modify existing hardware to suit the requirements and needs of the target component. The conversion process allows a quick pivot to fulfill aggressive timelines. Instead of fabricating a new part, existing replacements are modified and augmented using a relatively low-cost advanced manufacturing technology. This method could benefit applications where a stop-gap part can be introduced while the baseline part is being manufactured, or in Cold Start situations discussed above.

### Discussion of Possible Embodiments

The following are non-exclusive descriptions of possible embodiments of the present invention.

According to an aspect of the present invention, there is provided a method of making a replacement part that includes obtaining a physical example of a target part and imaging the physical example of the target part to produce a 3D image of the target part. The 3D image of the target part is compared to parts in a PLM database to identify a reference part to use as a basis for making a replacement part for the target part. The PLM database includes a digital model for a baseline AM technique for making the reference part. The reference part is compared to the target part to identify missing and/or extraneous features on the reference part. A replacement part manufacturing method for modifying the reference part to provide missing features and/or to remove extraneous features to make a replacement part for the target part is determined. The replacement part for the target part is made using the replacement part manufacturing method.

The method of the preceding paragraph can optionally include, additionally and/or alternatively, any one or more of the following features, configurations and/or additional elements:
Optionally, and in accordance with the above, the target part is an aerospace part.

Optionally, and in accordance with any of the above, the aerospace part comprises an aluminum alloy, a titanium alloy, a superalloy material, or a specialty steel.

Optionally, and in accordance with any of the above, the aerospace part is a gas turbine engine part.

Optionally, and in accordance with any of the above, the replacement part manufacturing method includes at least one AM step.

Optionally, and in accordance with any of the above, the replacement part manufacturing method includes making the reference part using a first AM technique and depositing on the reference part a missing feature using a second AM technique.

Optionally, and in accordance with any of the above, the first AM technique is laser powder bed fusion.

Optionally, and in accordance with any of the above, the second AM technique is directed energy deposition.

Optionally, and in accordance with any of the above, the first AM technique is laser powder bed fusion and the second AM technique is directed energy deposition.

Optionally, and in accordance with any of the above, the replacement part manufacturing method includes at least one subtractive manufacturing step.

Optionally, and in accordance with any of the above, the at least one subtractive manufacturing step is machining and/or cutting.

Optionally, and in accordance with any of the above, the replacement part manufacturing method includes at least one AM step and at least one subtractive manufacturing step.

According to another aspect of the present invention, there is provided a replacement part including a substrate made using a first AM technique based on a reference part digital model and a missing element on the substrate. The reference part has a different design than a target part. The missing element is made using a second AM technique based on a replacement part method. The combination of the substrate and the missing element on the substrate conform to geometric and mechanical property specifications for the target part.

According to another aspect of the present invention, there is provided a replacement part including a substrate and a missing element on the substrate. The substrate may be made using a first AM technique based on a reference part digital model. The missing element may be made using a second AM technique based on a replacement part method. The reference part may have a different design than a target part. The combination of the substrate and the missing element on the substrate may conform to geometric and mechanical property specifications for the target part.

The replacement parts of the preceding paragraphs can optionally include, additionally and/or alternatively, any one or more of the following features, configurations and/or additional elements:
Optionally, and in accordance with any of the above, the missing element is formed directly on the substrate and includes artifacts of being formed directly on the substrate.

Optionally, and in accordance with any of the above, n the missing element is attached to the substrate by a joining process and includes artifacts of the joining process.

Optionally, and in accordance with any of the above, the target part is an aerospace part.

Optionally, and in accordance with any of the above, the aerospace part comprises an aluminum alloy, a titanium alloy, a superalloy material, or a specialty steel.

Optionally, and in accordance with any of the above, the aerospace part is a component of a gas turbine engine.

While the invention has been described with reference to an exemplary embodiment(s), it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment(s) disclosed, but that the invention will include all embodiments falling within the scope of the appended claims.

## Claims

1. A method of making a replacement part (10"), comprising:
obtaining a physical example of a target part (10);
imaging the physical example of the target part (10) to produce a three-dimensional (3D) image (10') of the target part;
comparing the 3D image (10') of the target part to parts (10-A,10-B) in a product lifecycle management (PLM) database to identify a reference part to use as a basis for making a replacement part for the target part (10), wherein the PLM database includes a digital model for a baseline additive manufacturing (AM) technique for making the reference part;
comparing the reference part to the target part (10) to identify missing features, extraneous features or a combination of missing features and extraneous features on the reference part;
determining a replacement part manufacturing method for modifying the reference part to provide the missing features, to remove extraneous features or a combination of missing features and extraneous features, to make a replacement part (10") for the target part (10);
making the replacement part for the target part (10) using the replacement part manufacturing method.

2. The method of claim 1, wherein the replacement part manufacturing method includes at least one AM step.

3. The method of claim 1 or 2, wherein the replacement part manufacturing method includes making the reference part using a first AM technique and depositing on the reference part a missing feature (10Δ) using a second AM technique.

4. The method of claim 3, wherein the first AM technique is laser powder bed fusion.

5. The method of claim 3 or 4, wherein the second AM technique is directed energy deposition.

6. The method of claim 3, 4 or 5, wherein the first AM technique is laser powder bed fusion and the second AM technique is directed energy deposition.

7. The method of any preceding claim, wherein the replacement part manufacturing method includes at least one subtractive manufacturing step.

8. The method of claim 7, wherein the at least one subtractive manufacturing step is machining and/or cutting.

9. The method of any preceding claim, wherein the replacement part manufacturing method includes at least one AM step and at least one subtractive manufacturing step.

10. A replacement part (10"), comprising:
a substrate (10-A) made using a first AM technique based on a reference part digital model, wherein the reference part has a different design than a target part (10); and
a missing element (10Δ) on the substrate (10-A), wherein the missing element (10Δ) is made using a second AM technique based on a replacement part method, wherein the combination of the substrate (10-A) and the missing element (10Δ) on the substrate (10-A) conforms to geometric and mechanical property specifications for the target part (10).

11. The replacement part (10") of claim 10, wherein the missing element (10Δ) is formed directly on the substrate (10-A) and includes artifacts of being formed directly on the substrate.

12. The replacement part (10") of claim 10, wherein the missing element (10A) is attached to the substrate (10-A) by a joining process and includes artifacts of the joining process.

13. The method or replacement part (10") of any preceding claim, wherein the target part (10) is an aerospace part.

14. The method or replacement part (10") of claim 13, wherein the aerospace part comprises an aluminum alloy, a titanium alloy, a superalloy material, or a specialty steel.

15. The method or replacement part (10") of claim 13 or 14, wherein the aerospace part is a part or component of a gas turbine engine.
